# EUROPEAN PATENT APPLICATION

(11) **EP 3 396 386 A1**
(43) Date of publication of application: **31.10.2018**
(21) Application number: 18169791.3
(22) Date of filing: 27.04.2018
(51) Int. Cl.: G01N 35/00, B25J 5/00

(54) **TRANSPORTING APPARATUS, TRANSPORTING METHOD, AND SAMPLE ANALYSIS SYSTEM**

(30) Priority: 28.04.2017 JP 2017089830
(71) Applicant: SYSMEX CORPORATION, Kobe-shi Hyogo 651-0073 (JP); Kawasaki Jukogyo Kabushiki Kaisha, Hyogo 650-8670 (JP)
(72) Inventor: TAKAI, Kei, Hyogo, 651-0073 (JP); NAGAI, Takaaki, Hyogo, 651-0073 (JP); IWASAKI, Yukio, Hyogo, 651-2239 (JP); OUCHI, Satoshi, Hyogo, 651-2239 (JP)
(74) Representative: Hoffmann Eitle

(57) **Abstract**

A transporting apparatus (10) transports a container configured to be used by a sample analysis apparatus or a rack (80) holding the container. The transporting apparatus (10) includes a robotic arm (11) that transports the container or the rack between a first sample analysis apparatus and a second sample analysis apparatus; and a base that supports the robotic arm.

## Description

### BACKGROUND

The disclosure relates to a transporting apparatus, a transporting method, and a sample analysis system.

There is known a transporting apparatus that transports a rack holding containers between sample analysis apparatuses. For example, Japanese Patent Application Publication No. H9-54096 (Patent Document 1) discloses a transporting apparatus that includes: a transport line including a transport belt that transports a rack holding containers between sample analysis apparatuses; and a turntable that changes the orientation of the rack.

Since a conventional transporting apparatus, like the one in Patent Document 1, transports a rack using a transport line including a transport belt, the conventional transporting apparatus requires sample analysis apparatuses to be arranged along the transport line in order for the transport line to connect the sample analysis apparatuses to each other. Further, although the turntable can change the orientation of the rack, it is difficult to transport the rack if the sample analysis apparatuses are at positions different in height. The sample analysis apparatuses therefore need to be at the same position in height. Due to the above points, use of a conventional transporting apparatus poses a problem where it is difficult to obtain high freedom in the installation of two or more sample analysis apparatuses.

One or more embodiments may improve the freedom in the installation of sample analysis apparatuses.

### SUMMARY

A transporting apparatus (10) according to a first aspect of the invention is a transporting apparatus (10) that transports a container (81) for use by a sample analysis apparatus or a rack (80) holding the container (81), the transporting apparatus (10) including: a robotic arm (11) that transports the container (81) or the rack (80) between a first sample analysis apparatus (20, 30) and a second sample analysis apparatus (40); and a base (12) that supports the robotic arm (11).

The transporting apparatus (10) according to the first aspect is, as described above, provided with the robotic arm (11) that transports the container (81) or the rack (80) between the first sample analysis apparatus (20, 30) and the second sample analysis apparatus (40). Since the robotic arm (11) can thus transport the container (81) or the rack (80) between the first sample analysis apparatus (20, 30) and the second sample analysis apparatus (40), the first sample analysis apparatus (20, 30) and the second sample analysis apparatus (40) do not need to be arranged along a transport device such as a belt conveyor. Also, the first sample analysis apparatus (20, 30) and the second sample analysis apparatus (40) do not need to be disposed at the same position in height. For these reasons, the first sample analysis apparatus (20, 30) and the second sample analysis apparatus (40) can be arranged freely within the working range of the robotic arm (11), which enables higher freedom in the installation of sample analysis apparatuses.

In the transporting apparatus (10) according to the first aspect, preferably, the second sample analysis apparatus (40) performs a different kind of analysis from that performed by the first sample analysis apparatus (20, 30). With such a configuration, the transporting apparatus (10) can transport the container (81) or the rack (80) between sample analysis apparatuses performing different kinds of analysis.

In the transporting apparatus (10) according to the first aspect, preferably, the base (12) is movable relative to an installation surface. With such a configuration, the transporting apparatus (10) can be moved relative to the first sample analysis apparatus (20, 30) and the second sample analysis apparatus (40), and therefore the transporting apparatus (10) can be placed freely in a position not getting in the way of other apparatuses or an operator. Further, the transporting apparatus (10), the first sample analysis apparatus (20, 30), or the second sample analysis apparatus (40) can be moved for maintenance. Thus, they do not need to be disposed with space from the other apparatuses or the wall for maintenance purposes, and this helps prevent the installation area from increasing and enables higher freedom in the installation of the sample analysis apparatuses.

In this case, preferably, the base (12) includes extendable fixation legs (122) and casters (121) that allow the base (12) to move relative to the installation surface, and when the fixation legs (122) are extended downward from the base (12), the casters (121) lift off the installation surface, and the base (12) is fixed relative to the installation surface. With such a configuration, the casters (121) allow the base (12) to move easily, and the fixation legs (122) allow the base (12) to be fixed relative to the installation surface easily.

In the transporting apparatus (10) according to the first aspect, preferably, the base (12) is installed in an area accessible to an operator of the first sample analysis apparatus (20, 30) and the second sample analysis apparatus (40). With such a configuration, the first sample analysis apparatus (20, 30) or the second sample analysis apparatus (40) can also be operated by the robotic arm (11) instead of being operated by an operator, and this can improve versatility.

In the transporting apparatus (10) according to the first aspect, preferably, the robotic arm (11) has a rated output of 80 W or below. With such a configuration, the output of the robotic arm (11) is thus small; therefore, an operator can enter the working area of the robotic arm (11) without a safety fence or a monitoring device. Energy saving can be achieved as well.

In the transporting apparatus (10) according to the first aspect, preferably, a working range of the robotic arm (11) includes a space for an operator to operate at least one of the first sample analysis apparatus (20, 30) and the second sample analysis apparatus (40). With such a configuration, the operator can operate the first sample analysis apparatus (20, 30) or the second sample analysis apparatus (40) while the robotic arm (11) is being used, and this can improve operation convenience and versatility.

The transporting apparatus (10) according to the first aspect preferably includes a replaceable hand (114, 115) that is provided to the robotic arm (11) and that grips the container (81) or the rack (80). With such a configuration, the container (81) or the rack (80) can be reliably transported by being held by the hand (114, 115). Further, since the hand (114, 115) is replaceable, the robotic arm (11) can be equipped with a hand (114, 115) selected as being suitable for holding the container (81) or the rack (80) according to the shape of the container (81) or the shape of the rack (80).

In the transporting apparatus (10) according to the first aspect, preferably, the robotic arm (11) is provided with a hand that grips the rack (80), the hand includes a first hand (114) that grips the rack (80) from above and a second hand (115) that grips the rack (80) from the side, and the first hand (114) and the second hand (115) are selectively used. With such a configuration, the direction for gripping the rack (80) can be switched according to the situation of the position where the rack (80) is to be passed, and therefore the rack (80) can be easily gripped with the first hand (114) and the second hand (115).

In the transporting apparatus (10) according to the first aspect, preferably, the robotic arm (11) includes a first robotic arm (11a) and a second robotic arm (11b), and the robotic arm (11) is capable of shifting the container (81) or the rack (80) between the first robotic arm (11a) and the second robotic arm (11b). Such a configuration for shifting the container (81) or the rack (80) enables easy adjustments on the directionality of the container (81) or the rack (80) and therefore prevents the order of the containers (81) or the racks (80) from changing in the sample analysis apparatus to which the container (81) or the rack (80) is transported. Further, since robotic arms (11) can be selectively used according to the situation of the position where the container (81) or the rack (80) is passed, the container (81) or the rack (80) can be easily passed using the robotic arm (11) suitable for the situation of the position where the container (81) or the rack (80) is passed.

In this case, the transport apparatus (10) preferably includes a placement part (124) on which to place the container (81) or the rack (80), and the container (81) or the rack (80) held by one of the first robotic arm (11a) and the second robotic arm (11b) is shifted to the other one of the first robotic arm (11a) and the second robotic arm (11b) via the placement part (124). Such a configuration helps prevent the first robotic arm (11a) and the second robotic arm (11b) from interfering with each other when shifting the container (81) or the rack (80) unlike a case where the first robotic arm (11a) and the second robotic arm (11b) pass the container (81) or the rack (80) to each other directly. Thus, the container (81) or the rack (80) can be easily shifted between the first robotic arm (11a) and the second robotic arm (11b).

In the transporting apparatus (10) configured to include the placement part (124), preferably, at least one side surface of the rack (80) is provided with an identifier (80a) used for identification by the first sample analysis apparatus (20, 30) and the second sample analysis apparatus (40), and the robotic arm (11) adjusts an orientation of the side surface of the rack provided with the identifier (80a) by placing the rack (80) on the placement part (124) and then holding the rack (80) again. Such a configuration enables reliable management of the rack (80) because it is made sure that the identifier (80a) is identified by both the first sample analysis apparatus (20, 30) and the second sample analysis apparatus (40).

The transporting apparatus (10) according to the first aspect preferably includes a controller (13) that controls motion of the robotic arm (11), the controller (13) being connected to the robotic arm (11) in a wired or wireless manner. With such a configuration, the transporting apparatus (10) can easily transport the container (81) or the rack (80) by causing the controller (13) to control the operation of the robotic arm (11).

In this case, preferably, the controller (13) acquires positional information on a position of at least one of the first sample analysis apparatus (20, 30) and the second sample analysis apparatus (40) relative to the base (12), and controls the motion of the robotic arm (11) based on the positional information acquired. Such a configuration enables the controller (13) to operate the robotic arm (11) while making positional adjustments, and therefore allows the container (81) or the rack (80) to be transported accurately even if the base (12) is not accurately positioned relative to the first sample analysis apparatus (20, 30) and the second sample analysis apparatus (40).

In the transporting apparatus (10) including the controller (13), preferably, the controller (13) is incorporated in the base (12). Such a configuration allows the installation area to be small and the distance between the controller (13) and the robotic arm (11) to be small, compared to a configuration where the controller (13) is provided separately from the base (12). Consequently, if the controller (13) and the robotic arm (11) are connected in a wired manner, the line connecting them can be shortened, enabling simplification of the apparatus configuration. Further, if the controller (13) and the robotic arm (11) are connected wirelessly, stable communication can be obtained.

In the transporting apparatus (10) including the controller (13), preferably, the controller (13) receives a signal from at least one of the first sample analysis apparatus (20, 30) and the second sample analysis apparatus (40), and controls the motion of the robotic arm (11) based on the signal received. Such a configuration enables the robotic arm (11) to transport the container (81) or the rack (80) in response to a transport-in request or a transport-out request for the container (81) or the rack (80) from the first sample analysis apparatus (20, 30) or the second sample analysis apparatus (40).

In the transporting apparatus (10) including the controller (13), preferably, the controller (13) receives a signal from an external control system, and controls the motion of the robotic arm (11) based on the signal received from the external control system. Such a configuration enables the external control system to collectively control not only the first sample analysis apparatus (20, 30) and the second sample analysis apparatus (40) but also the transporting apparatus (10).

The transporting apparatus (10) including the controller (13) preferably further includes an image capturer (117), and the controller (13) controls the motion of the robotic arm (11) based on an image captured by the image capturer (117). With such a configuration, for example, the controller (13) can operate the robotic arm (11) while checking the presence and position of any transported container (81) or rack (80) based on an image.

In the transporting apparatus (10) according to the first aspect, preferably, a discharge part to which to discharge the container (81) or the rack (80) is provided in the first sample analysis apparatus (20, 30), a supply part to which to supply the container (81) or the rack (80) is provided in the second sample analysis apparatus (40), any of the operator and the robotic arm (11) is able to remove the container (81) or the rack (80) from the discharge part, and any of the operator and the robotic arm (11) is able to pass the container (81) or the rack (80) to the supply part. Such a configuration enables the robotic arm (11) to remove the container (81) or the rack (80) from the discharge part where an operator removes the container (81) or the rack (80) and to pass the container (81) or the rack (80) at the supply part where an operator passes the container (81) or the rack (80); therefore, there is no need to provide an additional discharge part and an additional supply part exclusively for the robotic arm (11). This allows the apparatus to have a simple configuration.

In this case, preferably, the discharge part and the supply part are located at positions different in height from an installation surface, and the robotic arm (11) transports the container (81) or the rack (80) from the discharge part to the supply part, which differs from the discharge part in the height from the installation surface. With such a configuration, even if the discharge part and the supply part are at positions different in height, the container (81) or the rack (80) can be transported without an additional elevator device. Further, since analysis apparatuses having different heights can be easily combined and used, the freedom in selecting analysis apparatuses can be effectively enhanced.

In the transporting apparatus (10) according to the first aspect, preferably, the robotic arm (11) stops operating when coming into contact with an object other than a transporting object during operation. Such a configuration, for example, helps prevent the robotic arm (11) from applying a heavy impact to an operator when coming into contact with the operator. It also helps prevent the robotic arm (11) from being under an excessive load.

In the transporting apparatus (10) according to the first aspect, preferably, when removing the rack (80), the robotic arm (11) detects the rack (80) by moving a hand (115) that grips the rack (80) stepwise in a direction in which a plurality of the racks (80) are arranged, and once the rack (80) is detected, holds the rack (80) with the hand (115). With such a configuration, when removing the rack (80), the robotic arm (11) can remove the rack (80) by holding the rack (80) with the hand (115) easily without acquiring an accurate position of the rack (80).

In this case, preferably, the hand (115) is provided with a contactless sensor (1153) that detects the rack (80). With such a configuration, the rack (80) can be reliably detected using the contactless sensor (1153).

In the transporting apparatus (10) according to the first aspect, preferably, when removing the rack (80), the robotic arm (11) pushes and moves the rack (80) and then holds the rack (80). With such a configuration, the pushing and moving of the rack (80) can adjust the posture of the rack (80) even when the horizontal position of the rack (80) is slanted before the removal of the rack (80), thus helping prevent the rack (80) from being held in a slanted manner or failing to be held.

In the transporting apparatus (10) according to the first aspect, preferably, the first sample analysis apparatus (20, 30) is a blood cell analysis apparatus, and the second sample analysis apparatus (40) is a bacteriological examination apparatus. With such a configuration, the container (81) or the rack (80) can be transported between the blood cell analysis apparatus and the bacteriological examination apparatus and therefore can undergo both blood cell analysis and bacteriological examination automatically and successively.

A transporting apparatus (10) according to a second aspect of the invention is a transport apparatus (10) that transports a rack (80) holding a container (81) for use by a sample analysis apparatus, the transport apparatus (10) including: a robotic arm (11) that transports the rack (80) between a first sample analysis apparatus (20, 30) and a second sample analysis apparatus (40); and a base (12) that supports the robotic arm (11).

The transporting apparatus (10) according to the second aspect is, as described above, provided with the robotic arm (11) that transports the rack (80) between the first sample analysis apparatus (20, 30) and the second sample analysis apparatus (40). Since the robotic arm (11) can thus transport the rack (80) between the first sample analysis apparatus (20, 30) and the second sample analysis apparatus (40), the first sample analysis apparatus (20, 30) and the second sample analysis apparatus (40) do not need to be arranged along a transport device such as a belt conveyor. Also, the first sample analysis apparatus (20, 30) and the second sample analysis apparatus (40) do not need to be disposed at the same position in height. For these reasons, the first sample analysis apparatus (20, 30) and the second sample analysis apparatus (40) can be arranged freely within the working range of the robotic arm (11), which enables higher freedom in the installation of sample analysis apparatuses.

In the transporting apparatus (10) according to the second aspect, preferably, the second sample analysis apparatus (40) performs a different kind of analysis from that performed by the first sample analysis apparatus (20, 30). With such a configuration, the transporting apparatus (10) can transport the rack (80) between sample analysis apparatuses performing different kinds of analysis.

The transporting apparatus (10) according to the second aspect preferably includes a replaceable hand (114, 115) that is provided to the robotic arm (11) and that grips the rack (80). With such a configuration, the rack (80) can be reliably transported by being held by the hand (114, 115). Further, since the hand (114, 115) is replaceable, the robotic arm (11) can be equipped with a hand (114, 115) selected as being suitable for holding the rack (80) according to the shape of the rack (80).

In the transporting apparatus (10) according to the second aspect, preferably, the robotic arm (11) is provided with a hand that grips the rack (80), the hand including a first hand (114) that grips the rack (80) from above and a second hand (115) that grips the rack (80) from the side, and the first hand (114) and the second hand (115) are selectively used. With such a configuration, the direction for gripping the rack (80) can be switched according to the situation of the position where the rack (80) is to be passed, and therefore the rack (80) can be easily gripped using the first hand (114) and the second hand (115).

In the transporting apparatus (10) according to the second aspect, preferably, the robotic arm (11) includes a first robotic arm (11a) and a second robotic arm (11b) and is capable of shifting the rack (80) between the first robotic arm (11a) and the second robotic arm (11b). Such a configuration for shifting the rack (80) enables easy adjustments on the directionality of the rack (80) and therefore prevents the order of the racks (80) from changing in the sample analysis apparatus to which the rack (80) is transported. Further, since robotic arms (11) can be selectively used according to the situation of the position where the rack (80) is passed, the rack (80) can be easily passed using the robotic arm (11) suitable for the situation of the position where the rack (80) is passed.

In this case, preferably, the transporting apparatus (10) includes a placement part (124) on which to place the rack (80), and the rack (80) held by one of the first robotic arm (11a) and the second robotic arm (11b) is shifted to the other one of the first robotic arm (11a) and the second robotic arm (11b) via the placement part (124). Such a configuration helps prevent the first robotic arm (11a) and the second robotic arm (11b) from interfering with each other when shifting the rack (80) unlike a case where the first robotic arm (11a) and the second robotic arm (11b) pass the rack (80) to each other directly. Thus, the rack (80) can be easily shifted between the first robotic arm (11a) and the second robotic arm (11b).

In the transporting apparatus (10) configured to include the placement part (124), preferably, at least one side surface of the rack (80) is provided with an identifier (80a) used for identification by the first sample analysis apparatus (20, 30) and the second sample analysis apparatus (40), and the robotic arm (11) adjusts an orientation of the side surface of the rack provided with the identifier (80a) by placing the rack (80) on the placement part (124) and then holding the rack (80) again. Such a configuration enables reliable management of the rack (80) because it is made sure that the identifier (80a) is identified by both the first sample analysis apparatus (20, 30) and the second sample analysis apparatus (40).

A transporting method according to a third aspect of the invention is a transporting method of transporting a container (81) for use by a sample analysis apparatus or a rack (80) holding the container (81), the method including using a robotic arm (11) to transport the container (81) or the rack (80) between a first sample analysis apparatus (20, 30) and a second sample analysis apparatus (40).

The transporting method according to the third aspect, as described above, uses the robotic arm (11) to transport the container (81) or the rack (80) between the first sample analysis apparatus (20, 30) and the second sample analysis apparatus (40). Thus, the first sample analysis apparatus (20, 30) and the second sample analysis apparatus (40) do not need to be arranged along a transport device such as a belt conveyor. Also, the first sample analysis apparatus (20, 30) and the second sample analysis apparatus (40) do not need to be at the same position in height. As a result of the above, provided is a transporting method whereby the first sample analysis apparatus (20, 30) and the second sample analysis apparatus (40) can be arranged freely within the working range of the robotic arm (11), which offers higher freedom in the installation of sample analysis apparatuses.

In the transporting method according to the third aspect, preferably, the robotic arm (11) is used to transport the container (81) or the rack (80) between the first sample analysis apparatus (20, 30) and the second sample analysis apparatus (40) that performs a different kind of analysis from that performed by the first sample analysis apparatus (20, 30). With such a configuration, the robotic arm (11) can transport the container (81) or the rack (80) between sample analysis apparatuses performing different kinds of analysis.

In the transporting method according to the third aspect, preferably, the robotic arm (11) includes a first robotic arm (11a) and a second robotic arm (11b), and the robotic arm (11) transports the container (81) or the rack (80) by shifting the container (81) or the rack (80) between the first robotic arm (11a) and the second robotic arm (11b). Such a configuration for shifting of the container (81) or the rack (80) enables easy adjustments on the directionality of the container (81) or the rack (80) and therefore prevents the order of the containers (81) or the racks (80) from changing in the sample analysis apparatus to which the container (81) or the rack (80) is transported. Further, since robotic arms (11) can be selectively used according to the situation of the position where the container (81) or the rack (80) is passed, the container (81) or the rack (80) can be easily passed using the robotic arm (11) suitable for the situation of the position where the container (81) or the rack (80) is passed.

In this case, preferably, the container (81) or the rack (80) held by one of the first robotic arm (11a) and the second robotic arm (11b) is shifted to the other one of the first robotic arm (11a) and the second robotic arm (11b) via a placement part (124). Such a configuration helps prevent the first robotic arm (11a) and the second robotic arm (11b) from interfering with each other when shifting the container (81) or the rack (80) unlike a case where the first robotic arm (11a) and the second robotic arm (11b) pass the container (81) or the rack (80) to each other directly. Thus, the container (81) or the rack (80) can be easily shifted between the first robotic arm (11a) and the second robotic arm (11b).

In the transporting method that shifts the container (81) or the rack (80) via the placement part (124), preferably, the robotic arm (11) transports the rack (80) by, while transporting the rack (80), placing the rack (80) on the placement part (124) and then holding the rack (80) again. With such a configuration, the robotic arm (11) can shift the rack (80) by placing the rack (80) on the placement part (124), and therefore the directionality of and the position to hold the rack (80) can be adjusted.

In the transporting method that shifts the container (81) or the rack (80) via the placement part (124), preferably, at least one side surface of the rack (80) is provided with an identifier (80a) used for identification by the first sample analysis apparatus (20, 30) and the second sample analysis apparatus (40), and the robotic arm (11) adjusts an orientation of the side surface of the rack provided with the identifier (80a) by placing the rack (80) on the placement part (124) and then holding the rack (80) again. Such a configuration enables reliable management of the rack (80) because it is made sure that the identifier (80a) is identified by both the first sample analysis apparatus (20, 30) and the second sample analysis apparatus (40).

In the transporting method according to the third aspect, preferably, when removing the rack (80), the robotic arm (11) pushes and moves the rack (80) and then holds the rack (80). With such a configuration, the pushing and moving of the rack (80) can adjust the posture of the rack (80) even when the horizontal position of the rack (80) is slanted before the removal of the rack (80), thus helping prevent the rack (80) from being held in a slanted manner or failing to be held.

In the transporting method according to the third aspect, preferably, the robotic arm (11) transports a plurality of the containers (81) or a plurality of the racks (80) in an order in which samples in the containers are analyzed by the first sample analysis apparatus. Such a configuration helps prevent the order of analyzing samples from changing, allowing the first sample analysis apparatus (20, 30) and the second sample analysis apparatus (40) to analyze samples in the correct order.

A sample analysis system (100) according to a fourth aspect of the invention includes: a first sample analysis apparatus (20, 30); a second sample analysis apparatus (40); and a transport apparatus (10) that includes a robotic arm (11) that transports a container (81) for use by the sample analysis apparatuses or a rack (80) holding the container (81) between the first sample analysis apparatus (20, 30) and the second sample analysis apparatus (40) and a base (12) that supports the robotic arm (11).

The sample analysis system (100) according to the fourth aspect is, as described above, provided with the transporting apparatus (10) including the robotic arm (11) that transports the container (81) or the rack (80) between the first sample analysis apparatus (20, 30) and the second sample analysis apparatus (40). Since the robotic arm (11) can thus transport the container (81) or the rack (80) between the first sample analysis apparatus (20, 30) and the second sample analysis apparatus (40), the first sample analysis apparatus (20, 30) and the second sample analysis apparatus (40) do not need to be arranged along a transport device such as a belt conveyor. Also, the first sample analysis apparatus (20, 30) and the second sample analysis apparatus (40) do not need to be at the same position in height. As a result of the above, provided is the sample analysis system (100) in which the first sample analysis apparatus (20, 30) and the second sample analysis apparatus (40) can be arranged freely within the working range of the robotic arm (11), enabling higher freedom in the installation of sample analysis apparatuses.

In the sample analysis system (100) according to the fourth aspect, preferably, the second sample analysis apparatus (40) performs a different kind of analysis from that performed by the first sample analysis apparatus (20, 30). With such a configuration, the transporting apparatus (10) can transport the rack (80) between sample analysis apparatuses performing different kinds of analysis.

The sample analysis system (100) according to the fourth aspect preferably includes a collection unit (50b) that houses the container (81) or the rack (80) transported from the first sample analysis apparatus (20, 30); and an introduction unit (50c) that houses the container (81) or the rack (80) to be introduced to the second sample analysis apparatus (40), and the robotic arm (11) transports the container (81) or the rack (80) to be housed on the introduction unit (50c) to the second sample analysis apparatus (40). With such a configuration, the racks (80) to be transported to the second sample analysis apparatus (40) can be housed and collected on the introduction unit (50c), and therefore the position where the robotic arm (11) receives the rack (80) can be kept within a certain range. Further, an operator can easily collect the racks (80) collected on the collection unit (50b).

Higher freedom can be offered in the installation of sample analysis apparatuses.

### BRIEF DESCRIPTION OF DRAWINGS

FIG. 1 is a diagram illustrating an outline of a sample analysis system in which a transporting apparatus is provided;
FIG. 2 is a perspective view of a sample analysis system in which a transporting apparatus is provided;
FIG. 3 is a diagram illustrating a transporting method;
FIG. 4 is a perspective view illustrating an example of a calibration member;
FIG. 5A is a diagram illustrating an example of how a transporting apparatus is fixed, and FIG. 5B is a diagram further illustrating an example of how a transporting apparatus is fixed;
FIG. 6 is a diagram illustrating a first hand;
FIG. 7 is a diagram illustrating a second hand;
FIG. 8 is a diagram illustrating a first hand and a second hand;
FIG. 9 is a diagram illustrating a first example of how positioning of a rack is performed;
FIG. 10 is a diagram illustrating a second example of how positioning of a rack is performed;
FIG. 11 is a diagram illustrating a third example of how positioning of a rack is performed;
FIG. 12 is a diagram illustrating an example of how a rack is detected;
FIG. 13 is a diagram illustrating a first example of positional adjustment of a rack;
FIG. 14 is a diagram illustrating a second example of positional adjustment of a rack;
FIG. 15 is a front view illustrating height positions of respective apparatuses in a sample analysis system; and
FIG. 16 is a diagram illustrating a robotic arm equipped with an image capturer.

### DETAILED DESCRIPTION

Embodiments are described below with reference to the drawings.

### (Outline of the Transporting Apparatus)

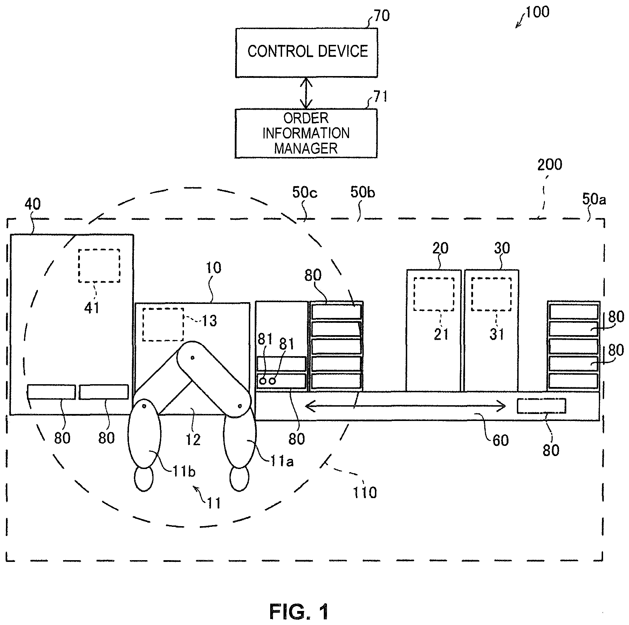

With reference to FIG. 1, a description is given of an outline of a transporting apparatus 10 according to one or more embodiments.

The transporting apparatus 10 according to one or more embodiments transports a container 81 for use by a sample analysis apparatus or transports a rack 80 holding the container 81. The container 81 contains a sample therein and is transported to a sample analysis apparatus. The sample is a biological specimen collected from an object under examination (subject), such as blood, urine, and cells.

As illustrated in FIG. 1, the transporting apparatus 10 is provided in a sample analysis system 100. The sample analysis system 100 includes the transporting apparatus 10, first sample analysis apparatuses 20 and 30, a second sample analysis apparatus 40, an introduction unit 50a, a collection unit 50b, an introduction unit 50c, a transporter 60, a control device 70, and an order information manager 71. The sample analysis system 100 is used for, for example, clinical laboratory examination. The sample analysis system 100 is provided in a hospital or an examination body.

In the example illustrated in FIG. 1, the first sample analysis apparatuses 20 and 30, the second sample analysis apparatus 40, the introduction unit 50a, the collection unit 50b, and the introduction unit 50c are arranged in a straight line. Note that the first sample analysis apparatuses 20 and 30, the second sample analysis apparatus 40, the introduction unit 50a, the collection unit 50b, and the introduction unit 50c may be arranged in a curved line depending on the shape of the room or other pieces of equipment in the room.

The transporting apparatus 10 includes a robotic arm 11, a base 12, and a controller 13. The first sample analysis apparatus 20 includes a controller 21. The first sample analysis apparatus 30 includes a controller 31. The second sample analysis apparatus 40 includes a controller 41.

The robotic arm 11 includes, for example, a first robotic arm 11a and a second robotic arm 11b. In other words, the transporting apparatus 10 is provided with two robotic arms 11. Note that the transporting apparatus 10 may be provided with one robotic arm 11 or three or more robotic arms 11. In one or more embodiments, the robotic arm 11 transports the container 81 or the rack 80 between the first sample analysis apparatus 20, 30 and the second sample analysis apparatus 40. Specifically, the robotic arm 11 transports the rack 80 housing the container 81. Note that the robotic arm 11 may directly hold and transport the container 81. The robotic arm 11 is capable of transporting the container 81 or the rack 80 both horizontally and vertically.

The robotic arm 11 is provided to transport the container 81 or the rack 80 between the first sample analysis apparatus 20, 30 and the second sample analysis apparatus 40. Since the robotic arm 11 can thus transport the container 81 or the rack 80 between the first sample analysis apparatus 20, 30 and the second sample analysis apparatus 40, the first sample analysis apparatus 20, 30 and the second sample analysis apparatus 40 do not need to be arranged along a transport device such as a belt conveyor. In addition, the first sample analysis apparatus 20, 30 and the second sample analysis apparatus 40 do not need to be disposed at the same position in height. For these reasons, the first sample analysis apparatus 20, 30 and the second sample analysis apparatus 40 can be arranged freely at any positions within the working range of the robotic arm 11, which enables higher freedom in the installation of sample analysis apparatuses.

The working range of the robotic arm 11 includes a space for an operator to operate at least one of the first sample analysis apparatus 20, 30 and the second sample analysis apparatus 40. In other words, a working range 110 of the robotic arm 11 overlaps an operation space 200 for an operator. Thus, the operator can operate the first sample analysis apparatus 20, 30 or the second sample analysis apparatus 40 while the robotic arm 11 is being used, and this can improve operation convenience and versatility.

The base 12 supports the robotic arm 11. Specifically, the base 12 supports the robotic arm 11 from below. In one or more embodiments, the base 12 is disposed separately or independently from the first sample analysis apparatus 20, 30 and the second sample analysis apparatus 40.

The base 12 is disposed separately from the first sample analysis apparatus 20, 30 and the second sample analysis apparatus 40. Thus, the transporting apparatus 10 can be easily moved relative to the first sample analysis apparatus 20, 30 and the second sample analysis apparatus 40, and this makes it easy to move the transporting apparatus 10, the first sample analysis apparatus 20, 30, or the second sample analysis apparatus 40 for maintenance. Thus, they do not need to be disposed with space from the other apparatuses or the wall for maintenance purposes, and this helps prevent the installation area from increasing and enables higher freedom in the installation of the sample analysis apparatuses.

Further, the base 12 is disposed separately from the installation surfaces on which the first sample analysis apparatus 20, 30 and the second sample analysis apparatus 40 are installed. In other words, the base 12 is movable relative to the installation surfaces. Thus, the transporting apparatus 10 can be moved relative to the first sample analysis apparatus 20, 30 and the second sample analysis apparatus 40, and can therefore be disposed freely at any position not getting in the way of the other apparatuses and the operator.

The base 12 is installed in an area accessible to an operator of the first sample analysis apparatus 20, 30 and the second sample analysis apparatus 40. Thus, an operation performed on the first sample analysis apparatus 20, 30 or the second sample analysis apparatus 40 can also be performed by the robotic arm 11 instead of an operator. This improves versatility.

The base 12 is installed in an area accessible to an operator of the first sample analysis apparatus 20, 30 and the second sample analysis apparatus 40 while the robotic arm 11 is working. Thus, the operator can operate the first sample analysis apparatus 20, 30 and the second sample analysis apparatus 40 without stopping the robotic arm 11 to work.

The controller 13 controls the motion of the robotic arm 11. The controller 13 includes, for example, a central processing unit (CPU), memory, and the like. The controller 13 is connected to the robotic arm 11 in a wired or wireless manner. In other words, the controller 13 transmits a signal for controlling the robotic arm 11 to the robotic arm 11 in a wired or wireless manner. The controller 13 thus causes the robotic arm 11 to work and enables easy transport of the container 81 or the rack 80.

The controller 13 is, for example, incorporated or housed in the base 12. This allows the installation area to be small and the distance between the controller 13 and the robotic arm 11 to be small, compared to when the controller 13 is provided separately from the base 12. Consequently, if the controller 13 and the robotic arm 11 are connected in a wired manner, the line connecting them can be shortened, enabling simplification of the apparatus configuration. Further, if the controller 13 and the robotic arm 11 are connected wirelessly, stable communication can be obtained. Note that the controller 13 may be provided outside the base 12.

Examples of the first sample analysis apparatus 20, 30 include apparatuses for blood analysis, for immunity examination, for urine examination, and for cell examination. The first sample analysis apparatus 20, 30 is, for example, a blood cell analysis apparatus. The second sample analysis apparatus 40 is disposed across the transporting apparatus 10 from the first sample analysis apparatuses 20 and 30. In other words, the transporting apparatus 10 is provided between the second sample analysis apparatus 40 and the first sample analysis apparatuses 20 and 30. The second sample analysis apparatus 40 is, for example, an apparatus that performs, if necessary, additional analysis on the sample having undergone the analysis by the first sample analysis apparatuses 20 and 30. The second sample analysis apparatus 40 is, for example, an apparatus that measures immunity items. In other words, the first sample analysis apparatus 20, 30 and the second sample analysis apparatus 40 perform different kinds of analysis.

The controller 21 controls the operation of the first sample analysis apparatus 20. The controller 21 includes, for example, a CPU, memory, and the like. The controller 21 is incorporated in the first sample analysis apparatus 20. Based on order information from the order information manager 71, the controller 21 controls the first sample analysis apparatus 20 so that the first sample analysis apparatus 20 analyzes a sample in the container 81. In other words, the controller 21 performs control such that the first sample analysis apparatus 20 analyzes a sample which has been ordered to be analyzed by the first sample analysis apparatus 20.

The controller 31 controls the operation of the first sample analysis apparatus 30. The controller 31 includes, for example, a CPU, memory, and the like. The controller 31 is incorporated in the first sample analysis apparatus 30. Based on order information from the order information manager 71, the controller 31 controls the first sample analysis apparatus 30 so that the first sample analysis apparatus 30 analyzes a sample in the container 81. In other words, the controller 31 performs control such that the first sample analysis apparatus 30 analyzes a sample which has been ordered to be analyzed by the first sample analysis apparatus 30.

The controller 41 operates the operation of the second sample analysis apparatus 40. The controller 41 includes, for example, a CPU, memory, and the like. The controller 41 is incorporated in the second sample analysis apparatus 40. Based on order information from the order information manager 71, the controller 41 controls the second sample analysis apparatus 40 so that the second sample analysis apparatus 40 analyzes a sample in the container 81. In other words, the controller 41 performs control such that the second sample analysis apparatus 40 analyzes a sample which has been ordered to be analyzed by the second sample analysis apparatus 40.

The introduction unit 50a houses the container 81 or the rack 80 to be introduced to the first sample analysis apparatuses 20 and 30. Specifically, the introduction unit 50a houses the rack 80 holding the container 81. The introduction unit 50a is capable of housing more than one rack 80. The collection unit 50b houses the container 81 or the rack 80 transported from the first sample analysis apparatuses 20 and 30. Specifically, the collection unit 50b houses the rack 80 holding the container 81. The collection unit 50b is capable of housing more than one rack 80. The introduction unit 50c houses the container 81 or the rack 80 to be introduced to the second sample analysis apparatus 40. In other words, the introduction unit 50c houses the container 81 having therein a sample that needs to be analyzed by the second sample analysis apparatus 40. In other words, the introduction unit 50c houses the container 81 or the rack 80 transported from the first sample analysis apparatuses 20 and 30. The introduction unit 50c houses the rack 80 holding the container 81. The introduction unit 50c is capable of housing more than one rack 80.

The transporter 60 transports the container 81 or the rack 80. Specifically, the transporter 60 transports the rack 80 holding the container 81. The transporter 60 extends in the direction in which the first sample analysis apparatus 20, 30, the introduction unit 50a, the collection unit 50b, and the introduction unit 50c are arranged. The transporter 60 transports the container 81 or the rack 80 to and from the first sample analysis apparatus 20, 30, the introduction unit 50a, the collection unit 50b, and the introduction unit 50c. The transporter 60 includes a conveyor. The conveyor of the transporter 60 transports the rack 80 horizontally.

The control device 70 is configured to perform overall control of the sample analysis system 100. Specifically, the control device 70 is configured to control the order information manager 71. The control device 70 is, for example, a personal computer. The order information manager 71 manages analysis orders for samples. Specifically, the order information manager 71 manages the kinds of analysis necessary for respective samples. The order information manager 71 is, for example, a personal computer. The order information manager 71 may be integral with the control device 70.

### (Outline of the Sample Analysis System)

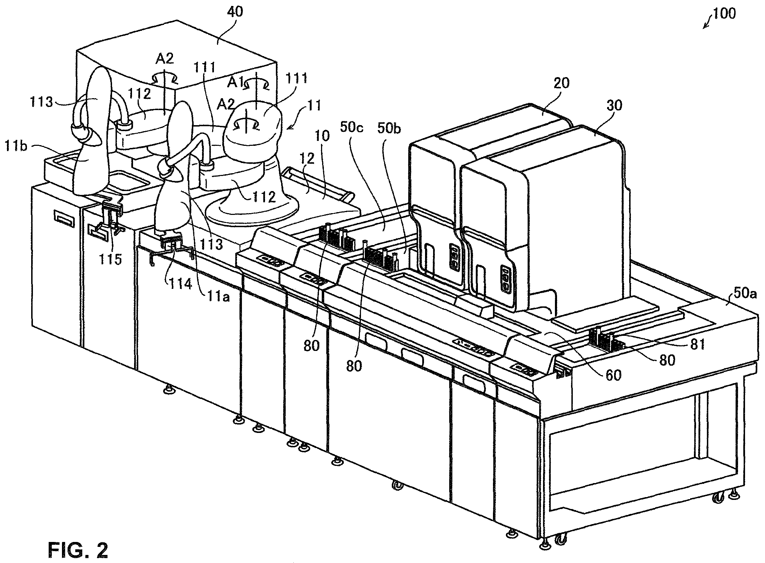

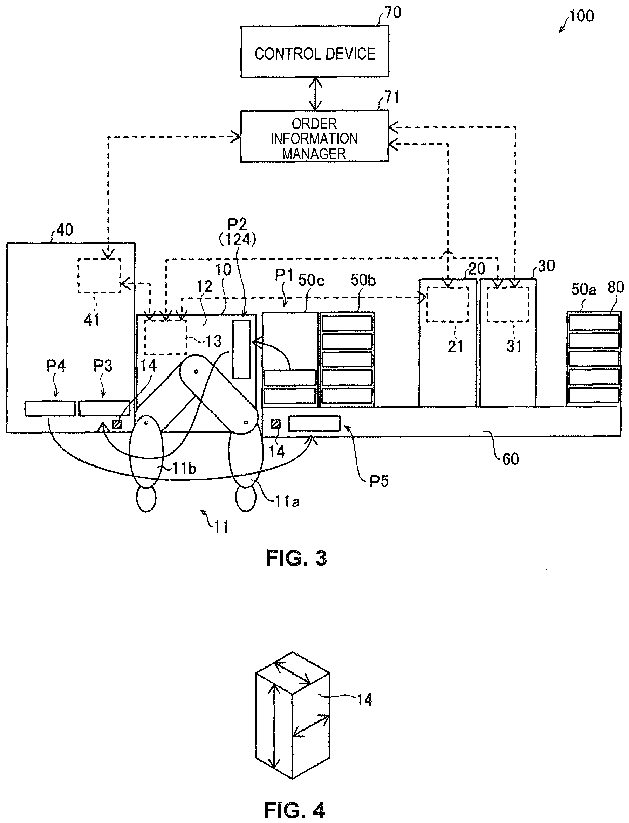

With reference to FIGs. 2 and 3, a description is given of an example of the sample analysis system 100.

As illustrated in FIG. 2, the sample analysis system 100 includes the transporting apparatus 10, the first sample analysis apparatuses 20 and 30, the second sample analysis apparatus 40, the introduction unit 50a, the collection unit 50b, the introduction unit 50c, and the transporter 60. The sample analysis system 100 is used for, for example, clinical laboratory examination. The sample analysis system 100 is provided in a hospital or an examination body.

The transporting apparatus 10 includes the robotic arm 11 and the base 12. The robotic arm 11 includes the first robotic arm 11a and the second robotic arm 11b. In one or more embodiments, the robotic arm 11 transports the container 81 or the rack 80 between the first sample analysis apparatus 20, 30 and the second sample analysis apparatus 40. Specifically, the robotic arm 11 transports the rack 80 housing the container 81.

The robotic arm 11 operates by, for example, being driven by an electric motor. The robotic arm 11 includes an encoder and the like, and how much the electric motor is driven is controlled. Further, the robotic arm 11 has a rated output equal to or below a predetermined power. Specifically, the rated output of the robotic arm 11 is equal to or below an output at which the robotic arm 11 can operate in an area where an operator is present. For example, the robotic arm 11 has a rated output of 80 W or below. Since the output of the robotic arm 11 is thus small, an operator can enter the working area of the robotic arm 11 without a safety fence or a monitoring device. Energy saving can be achieved as well.

The first robotic arm 11a includes a first link member 111, a second link member 112, and a vertical driver 113. The first robotic arm 11a is provided with a first hand 114 capable of holding the rack 80. The second robotic arm 11b includes a first link member 111, a second link member 112, and a vertical driver 113. The second robotic arm 11b is provided with a second hand 115 capable of holding the rack 80. The first link member 111 can turn about a first axis A1. The second link member 112 is coupled in such a manner that it can turn about a second axis A2 defined on the first link member 111 at a position different from the first axis A1. This enables the robotic arm 11 to operate by turning about a plurality of axes, expanding the workable range of the robotic arm 11. The first axis A1 of the first robotic arm 11a and the first axis A1 of the second robotic arm 11b are substantially superimposed in a plane view. Alternatively, the first axis A1 of the first robotic arm 11a and the first axis A1 of the second robotic arm 11b may be spaced away from each other in a plan view.

The first robotic arm 11a can move the first hand 114 horizontally by turning the first link member 111 and the second link member 112. In other words, using the first link member 111 and the second link member 112, the first robotic arm 11a can move the first hand 114 horizontally in a translational manner and can also rotate the first hand 114 horizontally. Thus, the rack 80 held by the first hand 114 can be moved horizontally.

By driving the vertical driver 113, the first robotic arm 11a can move the first hand 114 vertically. Thus, the rack 80 held by the first hand 114 can be moved vertically.

The second robotic arm 11b can move the second hand 115 horizontally by turning the first link member 111 and the second link member 112. In other words, using the first link member 111 and the second link member 112, the second robotic arm 11b can move the second hand 115 horizontally in a translational manner and can also rotate the second hand 115 horizontally. Thereby, the rack 80 held by the second hand 115 can be moved horizontally.

By driving the vertical driver 113, the second robotic arm 11b can move the second hand 115 vertically. Thus, the rack 80 held by the second hand 115 can be moved vertically.

The robotic arm 11 can shift the rack 80 between the first robotic arm 11a and the second robotic arm 11b. This enables easy adjustments on the directionality of the rack 80, and therefore prevents the order of the racks 80 from changing in the sample analysis apparatus to which the rack 80 is transported. Further, since the plurality of robotic arms 11 can be used selectively to suit the situation of the position where the rack 80 is to be passed, the rack 80 can be passed easily using the robotic arm 11 suitable for situation of the position where the rack 80 is to be passed.

The robotic arm 11 stops operating when coming into contact with an object other than the object to transport during its operation. The robotic arm 11 may detect contact with an object when, for example, a driving current which it detects exceeds a predetermined threshold. Alternatively, contact between the robotic arm 11 and an object may be detected using, for example, a camera that monitors the motion of the robotic arm 11. Alternatively, contact between the robotic arm 11 and an object may be detected using, for example, a sensor. This helps prevent the robotic arm 11 from applying a heavy impact to an operator even when coming into contact with the operator. This also helps prevent the robotic arm 11 from being under an excessive load.

The robotic arm 11 can retract to a position where it does not interfere with an operator. This helps prevent the robotic arm 11 from interfering with operation by an operator, and therefore helps prevent work efficiency for the operator from lowering. For example, the robotic arm 11 may move to the back when an operator performs any operation.

As illustrated in FIG. 3, the sample analysis system 100 further includes the control device 70 and the order information manager 71.

The transporting apparatus 10 further includes the controller 13. The first sample analysis apparatus 20 includes the controller 21. The first sample analysis apparatus 30 includes the controller 31. The second sample analysis apparatus 40 includes the controller 41.

The controller 21 controls the operation of the first sample analysis apparatus 20. The controller 21 can communicate with the order information manager 71. The controller 21 can also communicate with the controller 13 of the transporting apparatus 10. Based on order information from the order information manager 71, the controller 21 controls the first sample analysis apparatus 20 so that the first sample analysis apparatus 20 analyzes a sample in the container 81.

The controller 31 controls the operation of the first sample analysis apparatus 30. The controller 31 can communicate with the order information manager 71. The controller 31 can also communicate with the controller 13 of the transporting apparatus 10. Based on order information from the order information manager 71, the controller 31 controls the first sample analysis apparatus 30 so that the first sample analysis apparatus 30 analyzes a sample in the container 81.

The controller 41 controls the operation of the second sample analysis apparatus 40. The controller 41 can communicate with the order information manager 71. The controller 41 can also communicate with the controller 13 of the transporting apparatus 10. Based on order information from the order information manager 71, the controller 41 controls the second sample analysis apparatus 40 so that the second sample analysis apparatus 40 analyzes a sample in the container 81.

The controller 13 of the transporting apparatus 10 may receive a signal from at least one of the first sample analysis apparatus 20, 30 and the second sample analysis apparatus 40, and control the motion of the robotic arm 11 based on the signal received. This enables the robotic arm 11 to transport the rack 80 in response to a transport-in request or a transport-out request for the container 81 or the rack 80 from the first sample analysis apparatus 20, 30 or the second sample analysis apparatus 40.

For example, in transporting the rack 80 from the first sample analysis apparatus 20 or 30, the controller 13 controls the operation of the robotic arm 11 based on the ON/OFF state of a Ready signal from the first sample analysis apparatus 20 or 30. Specifically, upon receiving an ON Ready signal from first sample analysis apparatus 20 or 30, the controller 13 transmits an ON Move signal to the first sample analysis apparatus 20 or 30. Then, the first sample analysis apparatus 20 or 30 stops transporting the rack 80. Based on an OFF Ready signal from the first sample analysis apparatus 20 or 30 indicating that it has stopped transporting the rack 80, the controller 13 operates the robotic arm 11 and transports the rack 80 from the first sample analysis apparatus 20 or 30. Then, after transporting the rack 80, the controller 13 transmits an OFF Move signal to the first sample analysis apparatus 20 or 30. This enables the first sample analysis apparatus 20 or 30 to resume the transport of the rack 80.

In transporting the rack 80 into the second sample analysis apparatus 40, the controller 13 controls the robotic arm 11 based on the ON/OFF state of a Ready signal from the second sample analysis apparatus 40. Specifically, on receiving an ON Ready signal from the second sample analysis apparatus 40, the controller 13 transmits an ON Move signal to the second sample analysis apparatus 40. Then, the second sample analysis apparatus 40 stops transporting the rack 80. Based on an OFF Ready signal from the second sample analysis apparatus 40 indicating that it has stopped transporting the rack 80, the controller 13 operates the robotic arm 11 and transports the rack 80 into the second sample analysis apparatus 40. Then, after transporting the rack 80, the controller 13 transmits an OFF Move signal to the second sample analysis apparatus 40. This enables the second sample analysis apparatus 40 to resume the transport of the rack 80. Note that when the rack 80 is to be transported from the second sample analysis apparatus 40, similar signal exchanges are done to control the motion of the robotic arm 11.

The controller 13 may also control the motion of the robotic arm 11 irrespective of whether a signal is received from the first sample analysis apparatus 20, 30 and the second sample analysis apparatus 40. This enables the robotic arm 11 to be controlled independently from the first sample analysis apparatus 20, 30 and the second sample analysis apparatus 40, helping prevent the control from becoming complicated.

The controller 13 may also control the motion of the robotic arm 11 based on a signal which it receives from an external control system. This enables the external control system to collectively control not only the first sample analysis apparatus 20, 30 and the second sample analysis apparatus 40 but also the transporting apparatus 10. For example, the controller 13 may control the motion of the robotic arm 11 based on a signal received from the order information manager 71 or the control device 70.

The first sample analysis apparatus 20, 30 is provided with a discharge part to which the container 81 or the rack 80 is discharged. For example, the rack 80 is discharged at a position P1 on the introduction unit 50c. From the discharge part, the container 81 or the rack 80 can be removed by an operator, and also, the container 81 or the rack 80 can be removed by the robotic arm 11. The second sample analysis apparatus 40 is provided with a supply part to which the container 81 or the rack 80 is supplied. For example, the rack 80 is supplied at a position P3 on the second sample analysis apparatus 40. To the supply part, the container 81 or the rack 80 can be passed by an operator, and also, the container 81 or the rack 80 can be passed by the robotic arm 11. This enables the robotic arm 11 to remove the container 81 or the rack 80 from the discharge part where an operator removes the container 81 or the rack 80 and to pass the container 81 or the rack 80 to the supply part where an operator passes the container 81 or the rack 80; therefore, there is no need to provide an additional discharge part and an additional supply part exclusively for the robotic arm 11. This allows the apparatus to have a simple configuration.

In the example illustrated in FIG. 3, the rack 80 transported from the first sample analysis apparatus 20 or 30 to the introduction unit 50c is transported by the first robotic arm 11a from the position P1 to a position P2 on the transporting apparatus 10. The rack 80 transported to and placed at the position P2 is transported by the second robotic arm 11b to the position P3. It is the position P3 where the rack 80 is supplied to the second sample analysis apparatus 40. After its sample has been analyzed by the second sample analysis apparatus 40, the rack 80 is transported to the position P4. The rack 80 at the position P4 is transported by the second robotic arm 11b to a position P5 on the transporter 60. The rack 80 is then transported by the transporter 60 to the collection unit 50b.

There is a placement part 124 provided at the position P2 on the transporting apparatus 10. The rack 80 can be placed on the placement part 124. The robotic arm 11 shifts the rack 80 held by one of the first robotic arm 11a and the second robotic arm 11b to the other one of the first robotic arm 11a and the second robotic arm 11b via the placement part 124. In other words, the rack 80 held by one of the first robotic arm 11a and the second robotic arm 11b is placed on the placement part 124 by the one of the first robotic arm 11a and the second robotic arm 11b, and then the rack 80 on the placement part 124 is held by the other one of the first robotic arm 11a and the second robotic arm 11b. This helps prevent the first robotic arm 11a and the second robotic arm 11b from interfering with each other when shifting the rack 80 unlike a case where the first robotic arm 11a and the second robotic arm 11b pass the rack 80 to each other directly. Thus, the rack 80 can be easily shifted between the first robotic arm 11a and the second robotic arm 11b.

The controller 13 of the transporting apparatus 10 acquires information on the position of at least one of the first sample analysis apparatus 20, 30 and the second sample analysis apparatus 40 relative to the base 12, and controls the motion of the robotic arm 11 based on the positional information thus acquired. This enables the controller 13 to operate the robotic arm 11 while making positional adjustments, and therefore allows the container 81 or the rack 80 to be transported accurately even if the base 12 is not accurately positioned relative to the first sample analysis apparatus 20, 30 and the second sample analysis apparatus 40.

For example, the controller 13 detects the position of a calibration member 14 disposed near the first sample analysis apparatuses 20 and 30 and acquires the positional information on the first sample analysis apparatuses 20 and 30. The controller 13 also detects the position of a calibration member 14 disposed near the second sample analysis apparatus 40 and acquires the positional information on the second sample analysis apparatus 40. The calibration members 14 are disposed at known positions relative to the positions where the robotic arm 11 removes or passes the rack 80. Thus, detecting the position of the calibration member 14 allows acquisition of the position where the robotic arm 11 is to remove or pass the rack 80.

As illustrated in FIG. 4, the calibration members 14 are shaped as, for example, rectangular cuboids. The controller 13 operates the robotic arm 11 in the proximity of the calibration member 14 and thereby detects the calibration member 14. The controller 13 scans the calibration member 14 three dimensionally in three directions to detect the position of the calibration member 14. For example, a sensor or a camera provided in the robotic arm 11 is used to detect the calibration member 14.

### (How the Transporting Apparatus is Fixed)

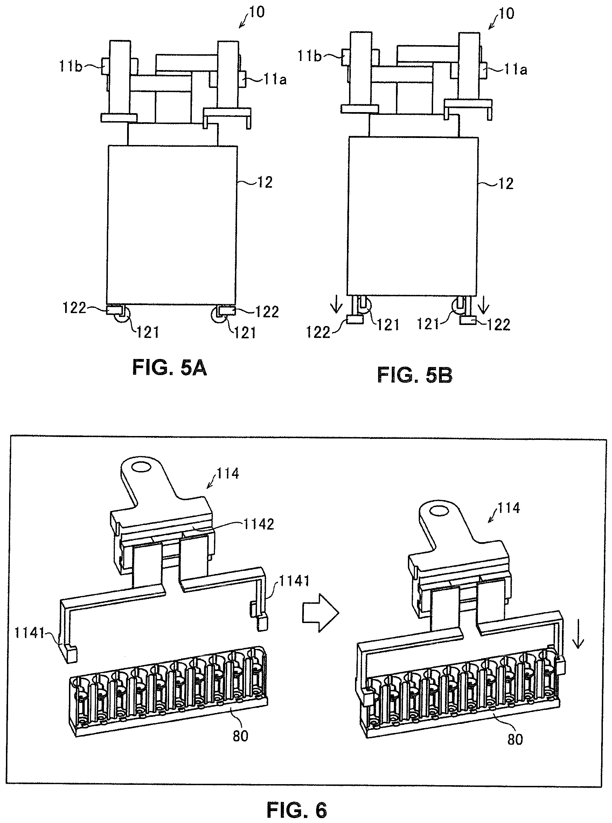

With reference to FIGs. 5A and 5B, a description is given of how the transporting apparatus 10 is fixed.

As in the example illustrated in FIGs. 5A and 5B, the base 12 of the transporting apparatus 10 is provided with, for example, casters 121 moved relative to the installation surface of the base 12 and extendable fixation legs 122. When the fixation legs 122 are retracted in the base 12 as illustrated in FIG. 5A, the casters 121 are in contact with the installation surface, allowing the transporting apparatus 10 to move. Further, when the fixation legs 122 are extended as illustrated in FIG. 5B, the casters 121 lift off the installation surface, allowing the transporting apparatus 10 to be fixed and stationary. The casters 121 are provided at the four corners: one for each corner. Further, the fixation legs 122 are provided at the four corners: one for each corner.

### (First Hand)

With reference to FIG. 6, a description is given of the first hand 114 provided to the first robotic arm 11a.

The first hand 114 can grip the rack 80. The first hand 114 is attached to the first robotic arm 11a in a replaceable manner. The first hand 114 includes paired grippers 1141 and an air cylinder 1142. The air cylinder 1142 enables the paired grippers 1141 to move toward and away from each other. The grippers 1141 can thus grip or release the rack 80. Alternatively, the grippers 1141 may be motor driven. The grippers 1141 may also be hydraulically driven by such as oil pressure or water pressure. The first hand 114 can grip the rack 80 from above. Further, the first hand 114 grips the rack 80 by sandwiching the rack 80 in the longitudinal direction. This way, the rack 80 can be gripped even if there is no space in the direction of the short side of the rack 80.

### (Second Hand)

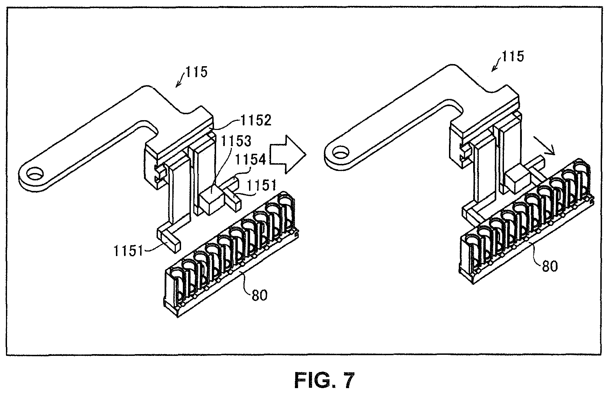

With reference to FIG. 7, a description is given of the second hand 115 provided to the second robotic arm 11b.

The second hand 115 can grip the rack 80. The second hand 115 is attached to the second robotic arm 11b in a replaceable manner. The second hand 115 includes paired grippers 1151, an air cylinder 1152, a sensor 1153, and a guide 1154. The air cylinder 1152 enables the paired grippers 1151 to move toward and away from each other. The grippers 1151 can thus grip or release the rack 80. Alternatively, the grippers 1151 may be motor driven. The grippers 1151 may also be hydraulically driven by such as oil pressure or water pressure. The second hand 115 can grip the rack 80 from the side. Further, the second hand 115 can grip the rack 80 by sandwiching the rack 80 in the longitudinal direction. For example, the second hand 115 can grip the rack 80 at positions between holders holding the containers 81 in the longitudinal direction of the rack 80. The sensor 1153 can sense the rack 80. The sensor 1153 is, for example, a contactless sensor. The sensor 1153 is, for example, an optical or ultrasonic sensor. Alternatively, the sensor 1153 may be a contact sensor. The sensor 1153 ensures that the second hand 115 grips the rack 80. The guide 1154 can adjust the posture of the rack 80 by pushing the rack 80.

### (First and Second Hands)

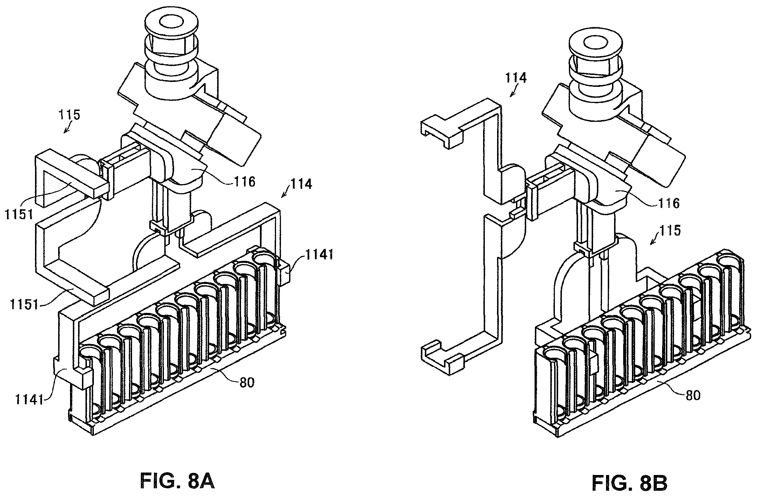

With reference to FIGs. 8A and 8B, a description is given of the first hand 114 and the second hand 115 provided to one robotic arm 11.

There may be only one robotic arm 11. In this case, the one robotic arm 11 may be provided with both the first hand 114 and the second hand 115. The first hand 114 and the second hand 115 are selectively used. The first hand 114 and the second hand 115 are provided in such a manner as to be switchable by a switcher 116. Specifically, turning the switcher 116 allows the rack 80 to be switched between being held by the first hand 114 and being held by the second hand 115. For example, if the first hand 114 is disposed in the lower side as illustrated in FIG. 8A, the rack 80 can be gripped by the first hand 114. Further, if the second hand 115 is disposed in the lower side as illustrated in FIG. 8B, the rack 80 can be gripped by the second hand 115. Note that the switcher 116 may be driven by air or by an electric motor. The switcher 116 may also be hydraulically driven by such as oil pressure or water pressure.

### (How Positioning of the Rack is Performed)

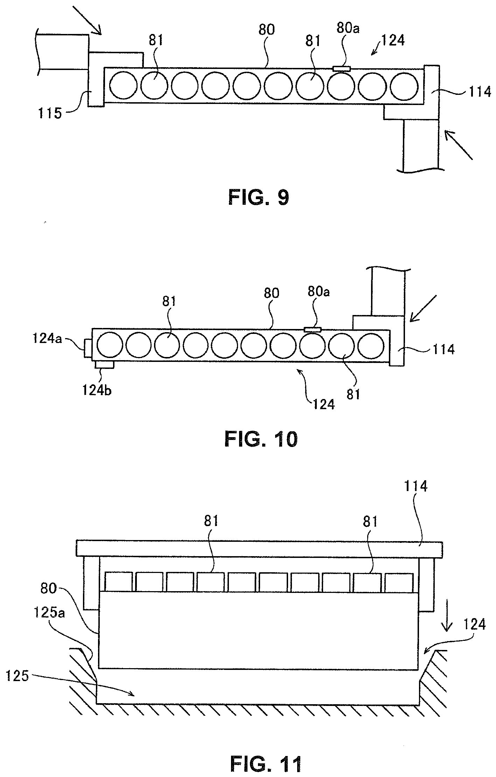

With reference to FIGs. 9 to 11, a description is given of how positioning of the rack 80 is performed.

At the placement part 124, the robotic arm 11 performs positioning of the transporting rack 80. The robotic arm 11 thus enables itself to have a more accurate holding position when re-holding the rack 80, allowing the rack 80 to be passed accurately at the transport destination.

Specifically, when transporting the rack 80, the robotic arm 11 places the rack 80 on the placement part 124, then holds the rack 80 again, and transports the rack 80. For example, as in a first example illustrated in FIG. 9, the robotic arm 11 performs positioning of the rack 80 by moving the rack 80 while sandwiching it with the first hand 114 and the second hand 115. In other words, by sandwiching the rack 80 diagonally with the first hand 114 and the second hand 115, the robotic arm 11 can place the rack 80 at a predetermined position on the placement part 124 and orient the rack 80 in a predetermined direction. Note that the robotic arm 11 may perform the positioning of the rack 80 by sandwiching the rack 80 in the direction of the long side or short side of the rack 80. Further, the robotic arm 11 may perform the positioning of the rack 80 by sandwiching the rack 80 in the direction of one of the long side and the short side thereof, and then sandwiching the rack 80 in the direction of the other one of the long side and the short side thereof.

At least one side surface of the rack 80 is provided with an identifier 80a used for identification by the first sample analysis apparatus 20, 30 and the second sample analysis apparatus 40. The identifier 80a is, for example, a bar code or an IC tag. The rack 80 is identified when its identifier 80a is scanned by the first sample analysis apparatus 20, 30 and the second sample analysis apparatus 40. Each container 81 is also provided with an identifier. This facilitates management of the container 81 and the rack 80 housing the container 81. The robotic arm 11 adjusts the orientation of the side surface of the rack 80 provided with the identifier 80a by placing the rack 80 on the placement part 124 and then holding the rack 80 again. In other words, shifting of the rack 80 at the placement part 124 adjusts the orientation of the identifier 80a of the rack 80 at the first sample analysis apparatus 20, 30 and the orientation of the identifier 80a of the rack 80 at the second sample analysis apparatus 40. This enables reliable management of the rack 80 because it is made sure that the identifier 80a is identified by both the first sample analysis apparatus 20, 30 and the second sample analysis apparatus 40.

Alternatively, as in a second example illustrated in FIG. 10, the robotic arm 11 may perform the positioning of the rack 80 by causing the first hand 114 to move the rack 80 into contact with positioning parts 124a and 124b. In other words, the robotic arm 11 can place the rack 80 in a predetermined position on the placement part 124 and orient the rack 80 in a predetermine direction by sandwiching the rack 80 diagonally with the first hand 114 and the positioning parts 124a and 124b.

Alternatively, as in a third example illustrated in FIG. 11, the robotic arm 11 may perform the positioning of the rack 80 by placing the rack 80 on a positioning part 125 with the first hand 114. The positioning part 125 is provided with, for example, a tapered portion 125a, and can guide the rack 80 to a predetermined position and posture by lowering the rack 80.

### (How the Rack is Detected)

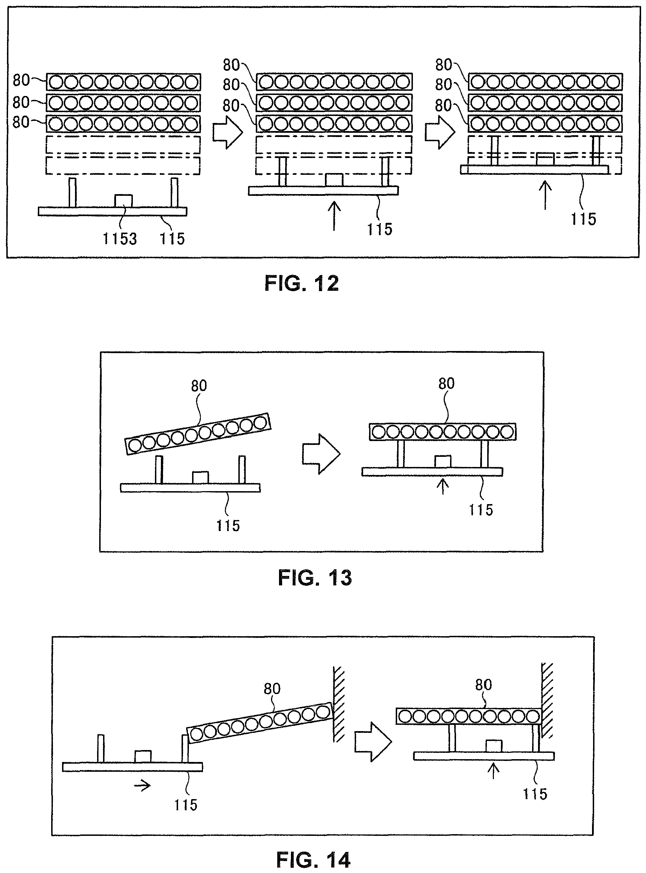

With reference to FIG. 12, a description is given of how the rack 80 is detected.

Two or more racks 80 may be placed at the removal position. In other words, each rack 80 is not placed at a single certain position at the removal position. After being analyzed by the second sample analysis apparatus 40, the racks 80 are pushed and fed to the removal position sequentially. The more racks 80 there are, the more the frontmost one of the racks 80 is pushed to the front at the removal position.

In removing the rack 80 at the removal position, the robotic arm 11 detects the rack 80 by moving the second hand 115 for gripping the rack 80 stepwise horizontally in a direction in which the racks 80 are arranged. Specifically, as in an example illustrated in FIG. 12, the robotic arm 11 moves the second hand 115 from the frontmost position to the back step by step, a distance equaling the width of the rack 80 at a time. In this event, the sensor 1153 detects the rack 80. The second hand 115 is moved step by step until the sensor 1153 detects the rack 80. Once the rack 80 is detected, the robotic arm 11 holds the rack 80 with the second hand 115. Thus, even without acquisition of an accurate position of the rack 80 at the removal position, the robotic arm 11 can easily hold and remove the rack 80 with its second hand 115. In other words, the motion of the robotic arm 11 can be simplified, which helps prevent the programs for operating it from becoming complicated.

Note that the second hand 115 may be moved stepwise, or may be continuously moved until the rack 80 is detected, and then stopped once the rack 80 is detected.

### (How the Rack is Adjusted in Position)

With reference to FIGs. 13 and 14, a description is given of how the rack 80 is adjusted in position.

Two or more racks 80 may be placed at the removal position. For example, after being analyzed by the second sample analysis apparatus 40, the racks 80 are pushed and fed to the removal position sequentially. Thus, the racks 80 may be placed at the removal position in a slanted manner.

Thus, the robotic arm 11 may adjust the horizontal position of the rack 80 when removing the rack 80. For example, when removing the rack 80 from the removal position, the robotic arm 11 may hold the rack 80 after pushing and moving the rack 80 horizontally. This pushing and moving of the rack 80 can adjust the posture of the rack 80 even when the horizontal position of the rack 80 is slanted before removal of the rack 80, thus helping prevent the rack 80 from being held in a slanted manner or failing to be held.

For example, as in a first example illustrated in FIG. 13, the rack 80 may be adjusted in position and posture by being pushed in the direction of the short side of the rack 80 by the second hand 115. Alternatively, as illustrated in a second example illustrated in FIG. 14, the rack 80 may be adjusted in position and posture by the second hand 115 which first performs positioning of the rack 80 in the direction of the long side of the rack 80 by pushing the rack 80 in the direction of the long side thereof and then pushes the rack 80 in the direction of the short side thereof.

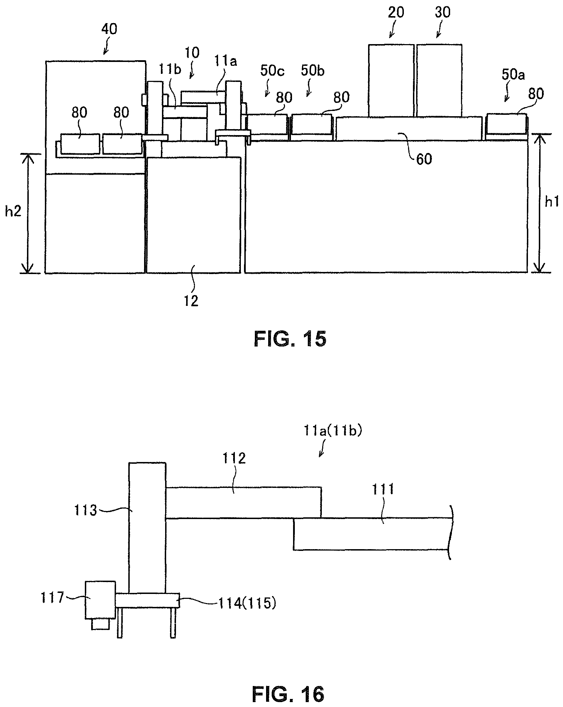

Next, with reference to FIG. 15, a description is given of the height positions of the respective apparatuses.

As illustrated in FIG. 15, the apparatuses may have different height positions. For example, the height position at which the first sample analysis apparatus 20, 30 transports the rack 80 may be different from the height position at which the second sample analysis apparatus 40 transports the rack 80. The height position at which the first sample analysis apparatus 20, 30 transports the rack 80 is h1, and the height position at which the second sample analysis apparatus 40 transports the rack 80 is h2, which is smaller than h1. Alternatively, h1 may be larger than h2. In other words, the discharge part where the rack 80 is discharged from the first sample analysis apparatus 20, 30 and the supply part where the rack 80 is supplied to the second sample analysis apparatus 40 are at positions different in height from the installation surface. The robotic arm 11 transports the rack 80 from the discharge part to the supply part whose height position from the installation surface is different from that of the discharge part. In other words, the robotic arm 11 can transport the rack 80 vertically. Thus, even if the discharge part and the supply part are at positions different in height, the rack 80 can be transported without an additional elevator device. Further, since analysis apparatuses having different heights can be easily combined and used, the freedom in selecting analysis apparatuses can be effectively enhanced.

As illustrated in FIG. 16, the robotic arm 11 may be provided with an image capturer 117. In this case, the controller 13 of the transporting apparatus 10 may control the motion of the robotic arm 11 based on an image captured by the image capturer 117. For example, the controller 13 may check the presence of any transported rack 80 based on an image captured. Then when there is any rack 80 being transported, the robotic arm 11 may remove the rack 80. Also, the controller 13 may remove the rack 80 after detecting the position and posture of the rack 80 to be removed based on an image captured. Further, the controller 13 may check the position to place the rack 80 based on an image captured, and then place the rack 80. Note that the image capturer 117 may be provided to the robotic arm 11 and moved when the robotic arm 11 is driven. Since the robotic arm 11 can change the angle and position to capture images, the image capturer 117 can capture an image at a desired position without having a wide field of view. Alternatively, the image capturer 117 may be fixed at a position separate from the robotic arm 11. The image capturer 117 includes, for example, an image pickup element and an optical system such as a lens or mirror leading light to the image pickup element.

The embodiments disclosed herein are exemplary in every aspect and should not be construed as being restrictive. The scope of the invention is defined not by the above descriptions of the embodiments but by the scope of claims, and further encompasses every change (modification) within the meaning and scope which are equivalent to the scope of claims.

### EXPLANATION OF REFERENCE NUMERALS

10: transporting apparatus, 11: robotic arm, 11a: first robotic arm, 11b: second robotic arm, 12: base, 13: controller, 20, 30: first sample analysis apparatus, 40: second sample analysis apparatus, 50b: collection unit, 50c: introduction unit, 80: rack, 80a: identifier, 81: container, 100: sample analysis system, 114: first hand, 115: second hand, 117: image capturer, 121: caster, 122: fixation leg, 124: placement part

## Claims

1. A transporting apparatus that transports a container configured to be used by a sample analysis apparatus or a rack holding the container, the transporting apparatus comprising:
a robotic arm that transports the container or the rack between a first sample analysis apparatus and a second sample analysis apparatus; and
a base that supports the robotic arm.

2. The transporting apparatus according to claim 1, wherein
the second sample analysis apparatus performs a different kind of analysis from that performed by the first sample analysis apparatus.

3. The transporting apparatus according to claim 1 or 2, wherein
the base is movable relative to an installation surface on which at least one of the first sample analysis apparatus and the second sample analysis apparatus is provided.

4. The transporting apparatus according to claim 3, wherein
the base comprises extendable fixation legs and casters that cause the base to be movable relative to the installation surface, and
in a condition in which the fixation legs are extended downward from the base, the casters lift off the installation surface, and the base is fixed to the installation surface.

5. The transporting apparatus according to any one of claims 1 to 4, wherein
the base is installed in an area accessible to an operator of the first sample analysis apparatus and the second sample analysis apparatus.

6. The transporting apparatus according to any one of claims 1 to 5, wherein
the robotic arm has a rated output of 80 W or below.

7. The transporting apparatus according to any one of claims 1 to 6, wherein
a working range of the robotic arm comprises a space for an operator to operate at least one of the first sample analysis apparatus and the second sample analysis apparatus.

8. The transporting apparatus according to any one of claims 1 to 7, wherein the robotic arm is provided with a replaceable hand that grips the container or the rack.

9. The transporting apparatus according to any one of claims 1 to 8, wherein
the robotic arm is provided with a hand that grips the rack,
the hand comprises a first hand that grips the rack from above and a second hand that grips the rack from side, and
the first hand and the second hand are selectively used.

10. The transporting apparatus according to any one of claims 1 to 9, wherein
the robotic arm comprises a first robotic arm and a second robotic arm, and
the robotic arm is capable of shifting the container or the rack between the first robotic arm and the second robotic arm.

11. The transporting apparatus according to claim 10, further comprising a placement part on which the container or the rack is placed, wherein
the container or the rack held by one of the first robotic arm and the second robotic arm is shifted to the other one of the first robotic arm and the second robotic arm via the placement part.

12. The transporting apparatus according to claim 11, wherein
at least one side surface of the rack is provided with an identifier used for identification by the first sample analysis apparatus and the second sample analysis apparatus, and
the robotic arm adjusts an orientation of the side surface of the rack provided with the identifier by placing the rack on the placement part and then holding the rack again.

13. The transporting apparatus according to any one of claims 1 to 12, further comprising a controller that controls motion of the robotic arm, wherein
the controller is connected to the robotic arm in a wired or wireless manner.

14. The transporting apparatus according to claim 13, wherein
the controller acquires positional information on a position of at least one of the first sample analysis apparatus and the second sample analysis apparatus relative to the base, and controls the motion of the robotic arm based on the acquired positional information.

15. A transporting method of transporting a container for use by a sample analysis apparatus or a rack holding the container, the method comprising:
transporting, by a robotic arm, the container or the rack between a first sample analysis apparatus and a second sample analysis apparatus.
